# EUROPEAN PATENT SPECIFICATION

(11) **EP 2 974 913 B1**
(45) Date of publication and mention of the grant of the patent: **09.08.2017**
(21) Application number: 14306174.5
(22) Date of filing: 18.07.2014
(51) Int. Cl.: B60R 25/021

(54) **An antitheft device for a steering column of a vehicle**
Diebstahlschutzvorrichtung für eine Lenksäule eines Fahrzeugs
Dispositif antivol pour colonne de direction d'un véhicule

(43) Date of publication of application: 20.01.2016
(73) Proprietor: U-Shin France, 94000 Créteil (FR)
(72) Inventor: Poggi, Patrice, 94046 Creteil Cedex (FR); Julien, Renaud, 94046 Creteil Cedex (FR)
(74) Representative: Gaillarde, Frédéric F. Ch.

(56) References cited:
- WO-A1-2014/202548
- DE-A1-102008 014 636
- FR-A1- 2 909 950
- FR-A1- 2 909 952
- JP-A- 2008 114 785
- JP-A- 2009 107 551
- US-A1- 2005 183 476
- US-A1- 2007 006 620

## Description

The invention relates to an antitheft device for a steering column of a vehicle.

These devices generally include a latch of an ignition key of the vehicle, as well as a bolt adapted to lock the movement of the steering column of a car. The main function of such devices is to lock the movement of the steering column whenever this movement is not authorized.

Generally, the unlocking of the antitheft device is done by turning the key into the latch. However, such movement requires a certain force that must be applied by a human hand. Depending on the vehicle user, the force to apply can prove difficult for certain person, such as old or arm/wrist injured people.

Additionally, under certain conditions, a worn out key forced upon the latch to unlock the steering column can snap under the heavy torque applied. This can prove bothersome as well as painful for the vehicle user.

Document FR 2 909 950A1 discloses a kind of antitheft device for a steering column of a vehicle comprising a camshaft with a ramp.

One object of the invention is to provide an antitheft device for a steering column of a vehicle, in particular a bolt designed such as the antitheft device does not present the drawbacks mentioned hereinabove.

To this end, the invention proposes an antitheft device for a steering column of a vehicle, the device comprising:
- a locking bolt able to occupy a position for locking a steering column,
- a slider for maneuvering the locking bolt between a lock and an unlocked position,
- a latch able to receive a key,
- a rotor coupled to the latch,
- a camshaft coupled to the rotor and dragged in rotation by the movement of the rotor said camshaft comprises a ramp,
the slider and the camshaft being arranged to that the slider has a translating movement when sliding along the ramp of the camshaft upon rotation of said camshaft,
wherein the ramp of the camshaft comprises a convex curve shape section, designed such as the translating movement of the slider induced by the rotation of the camshaft permits the completion of the unlocking of the steering column.

Advantageously, the antitheft device according to the invention provides a locking bolt rotation with a low key torque. The unlocking of the antitheft device is smoother, providing a safest movement for the user.

According to further embodiments which can be considered alone or in combination:
- the ramp of the camshaft comprises in addition to the convex curve shape section at least one linear section located at an end of said ramp; and/or
- the convex curve shape section of the ramp comprises at least one change of slope; and/or
- the convex curve shape section of the ramp comprises at least one linear sub-section; and/or
- the rotation axis of the camshaft is substantially the same as the rotation axis of the rotor; and/or
- the rotation axis of the camshaft is substantially parallel to the axis of translation of the slider; and/or
- the convex curve shape section of the ramp is arranged such as a rotation of an angle α of the camshaft causes a translating movement of the slider that permits the complete unlocking of the steering column, with α greater than or equal to 40° and smaller than or equal to 110°; and/or
- the angle β between the tangents taken at any of two distinct points having distinct tangent slopes on the convex curve shape section is obtuse, the angle β taken orientated inwards of said convex curve shape section; and/or
- the camshaft has a cylindrical shape.

Non limiting embodiments of the invention will now be described with reference to the accompanying drawing wherein:
- Figure 1 is an isometric overview of an antitheft device according to the invention,
- Figure 2 is a partial cut-away view of an antitheft device according to the invention,
- Figure 3 shows the main parts of one embodiment of the antitheft device interacting with each other, without the housing,
- Figures 4a and 4b represents a camshaft according to a prior art antitheft device,
- Figures 5a to 5c represents a camshaft according to the invention,
- Figures 6a to 6c show the translation of the locking bolt according to the invention when the slider is actuated by a camshaft according to the invention.

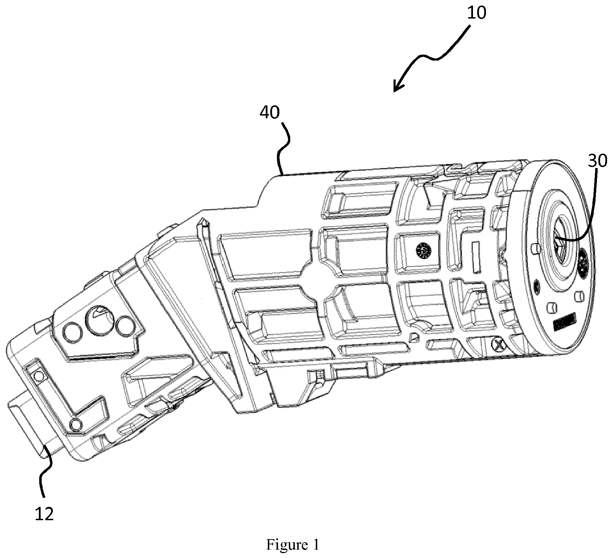

Figure 1 represents an isometric overview of an antitheft device 10 as isolated from a vehicle. The device comprises a latch 30 for a key, which, when turned, permits the ignition of the motor and actuate a locking bolt 12 to occupy a position to lock the steering column 20 (not shown in figure 1) of the vehicle. The antitheft mechanism is enclosed in a housing 40. The housing 40 is then embedded in a vehicle.

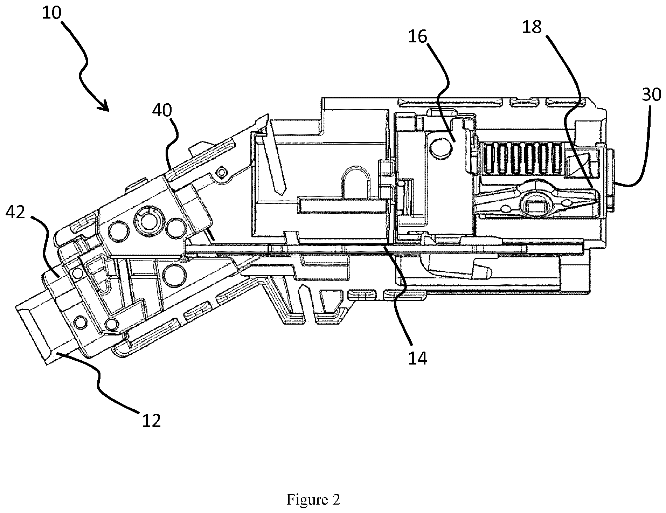

Figure 2 shows a partial cut-away view of the antitheft device wherein the main elements of the invention are visible. When the key is inserted into the latch 30 and turned, the rotor 18 rotates, dragging along the camshaft 16 on the same axis of rotation. The camshaft 16 comprises a uniform slope that permits, when rotating, to induce a uniform translating movement to the slider 14. The slider 14 translates within a slide in the housing 40 to enable a unilateral movement, the translation direction being parallel to the axis of rotation of the camshaft 16.

The slider 14 then drags along the locking bolt 12, which is located in a bolt housing 42, the bolt housing 42 embedded in the housing 40. The bolt housing 42 allows the bolt 12 to slide in only one axis and to interact with the steering column. The actuation of the rotor 18 using the key controls the position of the locking bolt 12, thus blocking or unblocking the steering column.

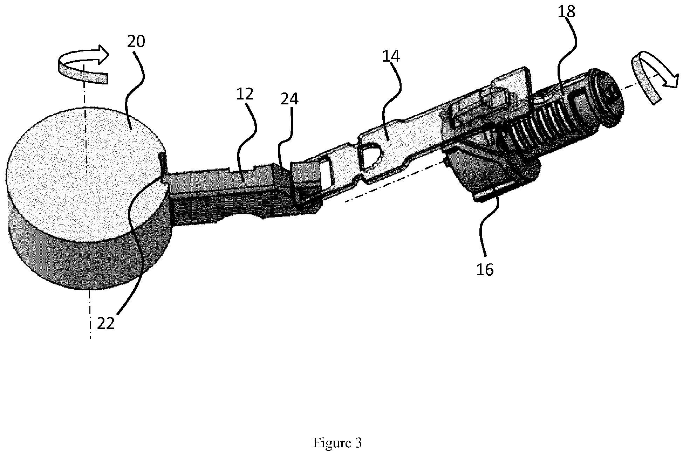

The steering column 20 shown on figure 3 comprises a slot 22 adapted to receive the bolt 12 which permits the locking in position of the steering column 20 about its axis of rotation. Whenever the steering column 20 is in its locked position, and if a torque is applied to the column axis, the steering column 20 applies a force on the bolt 12. This force, depending on its intensity, is a source of the difficulty (or impossibility) to unlock the steering column 20 by solely turning the key in the latch 30.

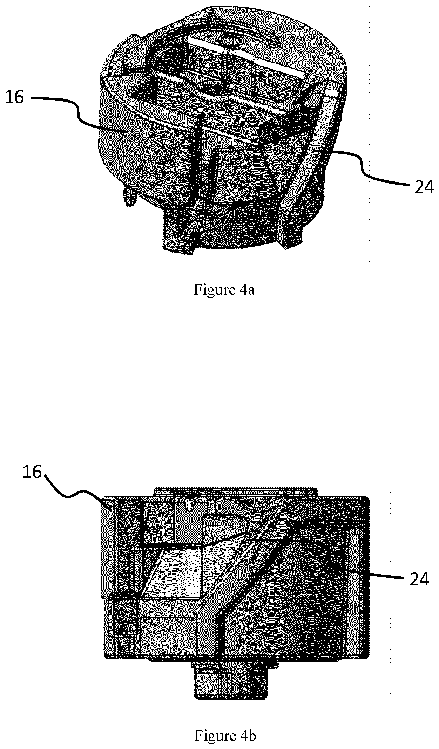

The camshaft 16 on figure 4a and 4b shows a prior art camshaft 16. The camshaft 16 is of cylindrical shape, and is secured to the rotor 18 so as to rotate along with a movement of a key in the latch 30. The camshaft 16 then interacts with the slider 14 to induce a translating movement to said slider 14. This translating movement depends on the shape of the ramp 24 present on the side of the camshaft 16. In this embodiment, the ramp 24 is defined by a linear slope, which induces a steady and linear movement to the slider 14, itself inducing a steady and linear movement to the locking bolt 12.

As a consequence of the design of the ramp 24 of the camshaft 16 on figures 4a and 4b, and because of the force applied to the locking bolt 12 by the steering column 20, the force needed to rotate the camshaft 16 is higher than the force needed to move the locking bolt 12. Consequently, the torque that has to be applied to the key in the latch 30 is high and it often proves difficult for a human hand to actuate the key in the latch 30.

The present invention aims at easing the unlocking of the steering column 20 by improving the design of the camshaft 16 in order to reduce the torque that the vehicle user needs to apply to the key to unlock the steering column 20.

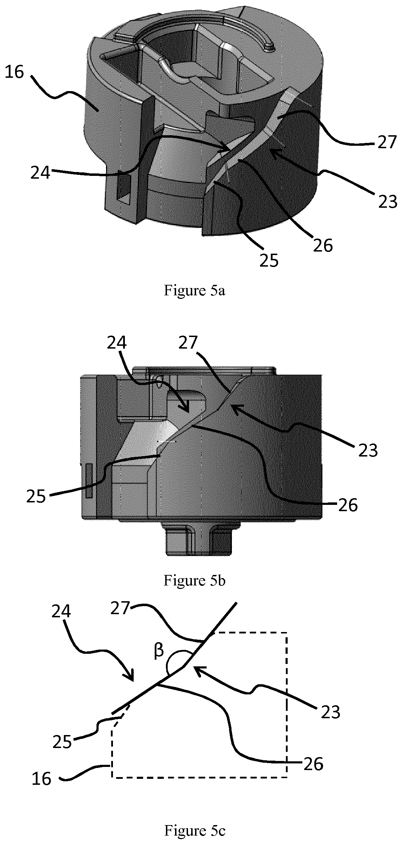

Figures 5a to 5c shows a design for a camshaft 16 according to one embodiment of the invention. The camshaft 16 has a cylindrical shape and comprises a ramp 24. The ramp 24, compared to the embodiment previously described, has two sections 23 and 25, wherein section 23 is separated in two sub-sections 26 and 27.

The first section 25, located at the bottom of the ramp 24 according to the orientation of the camshaft 16 as shown on figures 5a and 5b, is a linear ramp characterized by a steep slope. In this embodiment, the first section 25 permits the camshaft 16 to induce a stroke to ensure that the slider 14 is correctly engaged with said camshaft 16. The first section 25 therefore permits to disregard any clearance that can appear between the locking bolt 12 and the slider 14, or between the slider 14 and the camshaft 16. The first section 25 also ensures that the locking bolt 12 correctly starts its movement when the slider 14 interacts with the camshaft 16 through the beginning of the second section 23.

In one embodiment from the invention as presented in figures 5a to 5c, the second section 23 is separated in two distinct sub-sections 26 and 27. The first sub-section is a linear ramp with a slope angle smaller than the slope angle of the first section 25. The interface between the two sub-sections 26 and 27 comprises an abrupt change of slope, considering that the slope angle of second sub-section 27 is bigger than the slope angle of the first sub-section 26. The second sub-section 27 is a linear ramp as well.

The second section 23 is a ramp with a convex curve shape. As represented on figure 5c, the angle β between the tangents taken at two distinct points, one on the first sub-section 26 and one on the second sub-section 27 in this case, having distinct tangent slopes on the convex curve shape section 23 is obtuse, for example the angle β is greater than 90°, for example greater than or equal to 110°, and smaller than or equal to 170°, for example smaller than or equal to 150° . It is noted that the angle β is always taken orientated inwards of the convex curve shape section 23.

It must be noted that in this description, we define a convex curve shape as a curve wherein any segment formed by any two points belonging on the curve lies above the curve.

Also, the lengths of the different ramps section are adapted such as a rotation of an angle α of the camshaft causes a translating movement of the slider that permits the complete unlocking of the steering column, with α greater than or equal to 40°, for example greater than or equal to 50° and smaller than or equal to 110°, for example smaller than or equal to 70°.

In the embodiment represented on figures 5a to 5c, α is substantially equal to 60°.

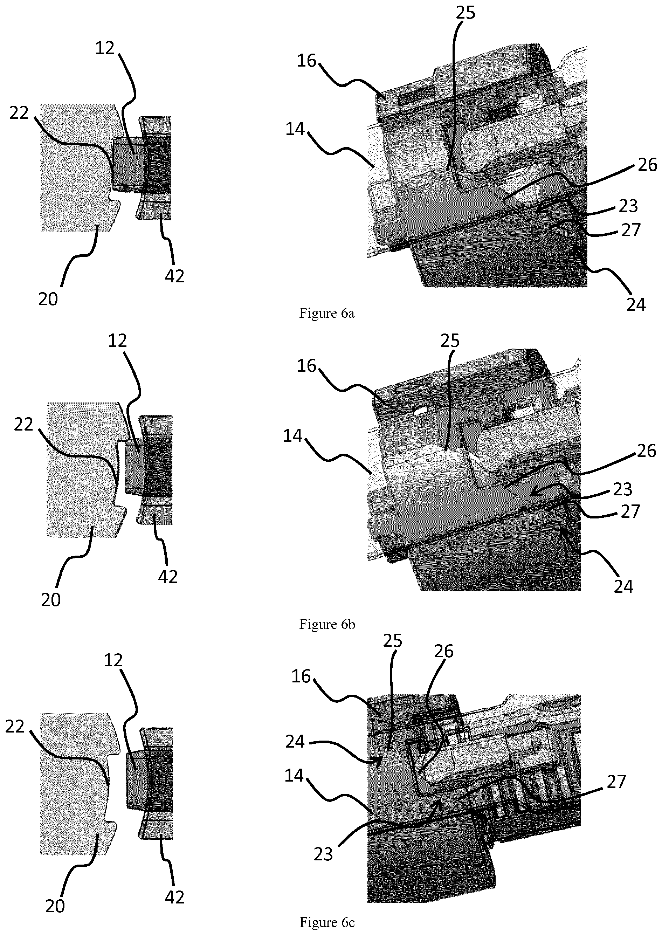

Figures 6a to 6c represent the different positions of the camshaft 16 according to one embodiment of the invention in regard to the slider 14, and the position of the bolt 12 in interaction with the steering column 20 relating to the corresponding positions of the camshaft 16 as represented in the figures. Also, the figures 6a to 6c illustrate the unlocking of the steering column after the camshaft 16 has interacted with the slider 14 through the first section 25 of the ramp 24, hence at the beginning of the second section 23, when the locking bolt 12 properly starts its movement.

On figure 6a, the steering column 20 is blocked in position with the bolt 12 located in the slot 22 of the steering column 20. In this position, a pre-load is generally applied on the steering column 20. Therefore, the steering column 20 exerts a force on the bolt 12 that prevents the bolt 12 to be easily removed from the slot 22 of the steering column 20. In this embodiment, the design of the second sub-section 26 enables the slider 14 to drag the locking bolt 12 with a low force applied on the key. During the sliding of the slider 14 on the second sub-section 26 of the ramp 24, the stroke evolution of the locking bolt 12 is slow, but allows the locking bolt 12 to begin its course to unlock the steering column 20 without requiring an important force from the user.

On figure 6b, the steering column 20 is close to the unlocked position. The bolt 12 is still in contact with the steering column 20 but the torque applied by the steering column 20 to the bolt 12 is negligible. The slider 14 contact area with the ramp 24 of the camshaft 16 gets closer to the interface between the two sub-sections 26 and 27, situated on the second section 23. At this point, the locking bolt 12 gets slowly closer to its unlocked position, while the force needed to be applied to the key remains low.

As the slider 14 transfers to the second sub-section 27, the steering column 20 should be unlocked. However, the locking bolt 12 needs to finish completely its course, in order to ensure that the locking bolt 12 do not get caught in the slot 22 of the steering column 20. Then, at this point, the steering column 20 does not exert any force on the bolt 12. Thus, the force needed to translate the bolt 12 is very low. The slider 14 moves along the second sub-section 27 of the ramp 24 to finish the stroke of the bolt 12 and to finalize the unlocking action. The design of the second-subsection 27 of the ramp 24 permits to quickly finish the stroke of the locking bolt 12 with low force from the vehicle user.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An antitheft device for a steering column of a vehicle, the device comprising:
- a locking bolt (12) able to occupy a position for locking a steering column (20),
- a slider (14) for maneuvering the locking bolt (12) between a lock and an unlocked position,
- a latch (30) able to receive a key,
- a rotor (18) coupled to the latch (30),
- a camshaft (16) coupled to the rotor (18) and dragged in rotation by the movement of the rotor (18), said camshaft (16) comprises a ramp (24),
the slider (14) and the camshaft (16) being arranged to that the slider has a translating movement when sliding along the ramp (24) of the camshaft (16) upon rotation of said camshaft (16),
the ramp (24) of the camshaft (16) comprising a convex curve shape section (23), designed such as the translating movement of the slider (14) induced by the rotation of the camshaft (16) permits the completion of the unlocking of the steering column (20),
**characterized in that** the ramp (24) of the camshaft (16) comprises in addition to the convex curve shape section (23) at least one linear section (25) located at an end of said ramp (24), the said linear section (25) being a linear ramp with a steep slope which permits the camshaft (16) to induce a stroke to ensure that the slider (14) is correctly engaged with said camshaft (16).

2. An antitheft device according to the preceding claim, wherein the convex curve shape section (23) of the ramp (24) comprises at least one change of slope.

3. An antitheft device according to any of the preceding claims, wherein the convex curve shape section (23) of the ramp (24) comprises at least one linear sub-section.

4. An antitheft device according to any of the preceding claims, wherein the rotation axis of the camshaft (16) is substantially the same as the rotation axis of the rotor (18).

5. An antitheft device according to any of the preceding claims, wherein the rotation axis of the camshaft (16) is substantially parallel to the axis of translation of the slider (14).

6. An antitheft device according to any of the preceding claims, wherein the convex curve shape section (23) of the ramp (24) is arranged such as a rotation of an angle α of the camshaft (16) causes a translating movement of the slider (14) that permits the complete unlocking of the steering column (20), with α greater than or equal to 40° and smaller than or equal to 110°.

7. An antitheft device according to any of the preceding claims, wherein the angle β between the tangents taken at any of two distinct points having distinct tangent slopes on the convex curve shape section is obtuse, the angle β taken orientated inwards of said convex curve shape section.

8. An antitheft device according to any of the preceding claims, wherein the camshaft (16) has a cylindrical shape.

## Patentansprüche

1. Diebstahlsicherungsvorrichtung für eine Lenksäule eines Fahrzeugs, wobei die Vorrichtung Folgendes umfasst:
- einen Verriegelungsbolzen (12), der dazu in der Lage ist, eine Position zur Verrieglung einer Lenksäule (20) einzunehmen,
- einen Schieber (14), um den Verriegelungsbolzen (12) zwischen einer verriegelten und einer unverriegelten Position zu verschieben,
- ein Schloss (30), das dazu in der Lage ist, einen Schlüssel aufzunehmen,
- einen Rotor (18), der an das Schloss (30) gekoppelt ist,
- eine Nockenwelle (16), die an den Rotor (18) gekoppelt ist und durch die Bewegung des Rotors (18) in Drehung gezogen wird, wobei die Nockenwelle (16) eine Rampe (24) umfasst,
wobei der Schieber (14) und die Nockenwelle (16) so angeordnet sind, dass der Schieber eine Translationsbewegung aufweist, wenn er entlang der Rampe (24) der Nockenwelle (16) bei Drehung der Nockenwelle (16) geschoben wird,
wobei die Rampe (24) der Nockenwelle (16) einen konvexen Kurvenformabschnitt (23) umfasst, der so entworfen ist, dass die Translationsbewegung des Schiebers (14), die von der Drehung der Nockenwelle (16) ausgeübt wird, ermöglicht, die Entriegelung der Lenksäule (20) zu vervollständigen,
**dadurch gekennzeichnet, dass** die Rampe (24) der Nockenwelle (16) zusätzlich zum konvexen Kurvenformabschnitt (23) mindestens einen linearen Abschnitt (25) umfasst, der sich am Ende der Rampe (24) befindet, wobei der lineare Abschnitt (25) eine lineare Rampe mit einer steilen Neigung ist, die ermöglicht, dass die Nockenwelle (16) einen Schlag ausübt, um sicherzustellen, dass der Schieber (14) korrekt in die Nockenwelle (16) eingegriffen ist.

2. Diebstahlschutzvorrichtung nach dem vorhergehenden Anspruch, wobei der konvexe Kurvenformabschnitt (23) der Rampe (24) mindestens eine Änderung der Neigung umfasst.

3. Diebstahlschutzvorrichtung nach einem der vorhergehenden Ansprüche, wobei der konvexe Kurvenformabschnitt (23) der Rampe (24) mindestens einen linearen Unterabschnitt umfasst.

4. Diebstahlschutz nach einem der vorhergehenden Ansprüche, wobei die Drehachse der Nockenwelle (16) im Wesentlichen gleich wie die Drehachse des Rotors (18) ist.

5. Diebstahlschutzvorrichtung nach einem der vorhergehenden Ansprüche, wobei die Drehachse der Nockenwelle (16) im Wesentlichen parallel zur Translationsachse des Schiebers (14) ist.

6. Diebstahlschutzvorrichtung nach einem der vorhergehenden Ansprüche, wobei der konvexe Kurvenformabschnitt (23) der Rampe (24) derart angeordnet ist, dass eine Drehung eines Winkels α der Nockenwelle (16) eine Translationsbewegung des Schiebers (14) verursacht, die die vollständige Entriegelung der Lenksäule (20) ermöglicht, wobei α größer als oder gleich wie 40° und kleiner als oder gleich wie 110° ist.

7. Diebstahlschutzvorrichtung nach einem der vorhergehenden Ansprüche, wobei der Winkel β zwischen den Tangenten, gesehen an jedem von zwei verschiedenen Punkten, mit verschiedenen Tangentenneigungen auf dem konvexen Kurvenformabschnitt stumpf ist, wobei der gesehene Winkel β auf die Innenseite des konvexen Kurvenformabschnitts gerichtet ist.

8. Diebstahlschutzvorrichtung nach einem der vorhergehenden Ansprüche, wobei die Nockenwelle (16) eine zylindrische Form aufweist.

## Revendications

1. Dispositif anti-vol pour une colonne de direction d'un véhicule, le dispositif comprenant :
- un boulon de verrouillage (12) apte à occuper une position pour verrouiller une colonne de direction (20),
- un élément de coulissement (14) pour manoeuvrer le boulon de verrouillage (12) entre une position de verrouillage et une position déverrouillée,
- un verrou (30) apte à recevoir une clé,
- un rotor (18) couplé au verrou (30),
- un arbre à cames (16) couplé au rotor (18) et entraîné en rotation par le mouvement du rotor (18), ledit arbre à cames (16) comprend une rampe (24),
l'élément de coulissement (14) et l'arbre à cames (16) étant agencés de sorte que l'élément de coulissement ait un mouvement de translation lorsqu'il coulisse le long de la rampe (24) de l'arbre à cames (16) lors de la rotation dudit arbre à cames (16)
la rampe (24) de l'arbre à cames (16) comprenant une section de forme incurvée convexe (23), conçue de sorte que le mouvement de translation de l'élément de coulissement (14) induit par la rotation de l'arbre à cames (16), permette d'achever le déverrouillage de la colonne de direction (20),
**caractérisé en ce que** la rampe (24) de l'arbre à cames (16) comprend en plus de la section de forme incurvée convexe (23) au moins une section linéaire (25) située au niveau d'une extrémité de ladite rampe (24), ladite section linéaire (25) étant une rampe linéaire ayant une pente raide qui permet à l'arbre à cames (16) d'induire une course pour s'assurer que l'élément de coulissement (14) est correctement engagé avec ledit arbre à cames (16).

2. Dispositif anti-vol selon la revendication précédente, dans lequel la section de forme incurvée convexe (23) de la rampe (24) comprend au moins un changement de pente.

3. Dispositif anti-vol selon l'une des revendications précédentes, dans lequel la section de forme incurvée convexe (23) de la rampe (24) comprend au moins une sous-section linéaire.

4. Dispositif antivol selon l'une des revendications précédentes, dans lequel l'axe de rotation de l'arbre à cames (16) est essentiellement le même que l'axe de rotation du rotor (18).

5. Dispositif anti-vol selon l'une des revendications précédentes, dans lequel l'axe de rotation de l'arbre à cames (16) est essentiellement parallèle à l'axe de translation de l'élément de coulissement (14).

6. Dispositif anti-vol selon l'une des revendications précédentes, dans lequel la section de forme incurvée convexe (23) de la rampe (24) est agencée de sorte qu'une rotation d'un angle α de l'arbre à cames (16) provoque un mouvement de translation de l'élément de coulissement (14) qui permet le déverrouillage complet de la colonne de direction (20), avec α supérieur ou égal à 40° et inférieur ou égal à 110°.

7. Dispositif anti-vol selon l'une des revendications précédentes, dans lequel l'angle β, entre les tangentes prises à un point quelconque de deux points distincts ayant des pentes de tangentes distinctes sur la section de forme incurvée convexe, est obtus, l'angle β étant orienté vers l'intérieur de ladite section de forme incurvée convexe.

8. Dispositif antivol selon l'une des revendications précédentes, dans lequel l'arbre à cames (16) a une forme cylindrique.
